# EUROPÄISCHE PATENTSCHRIFT

(11) **EP 0 633 227 B1**
(45) Veröffentlichungstag und Bekanntmachung des Hinweises auf die Patenterteilung: **18.06.1997**
(21) Anmeldenummer: 94106086.5
(22) Anmeldetag: 20.04.1994
(51) Int. Cl.: C02F 9/00, H01M 10/54

(54) **Verfahren zur Aufbereitung von Abwässern aus der Bleiakkumulatorenherstellung**
Process for treating waste waters from manufacture of lead accumulators
Procédé pour le traitement d'eaux résiduaires provenant de la fabrication d'accumulateurs au plomb

(30) Priorität: 08.07.1993 DE 4322781
(43) Veröffentlichungstag der Anmeldung: 11.01.1995
(73) Patentinhaber: VARTA Batterie Aktiengesellschaft, 30419 Hannover (DE)
(72) Erfinder: Czerny, Thomas, D-61479 Glashütten (DE); Jostes, Rainer Dr., D-65795 Hattersheim (DE)
(74) Vertreter: Kaiser, Dieter Ralf, Dipl.-Ing.

(56) Entgegenhaltungen:
- DE-A- 2 512 518
- US-A- 3 882 019
- US-A- 4 024 055

## Beschreibung

Die Erfindung betrifft ein Verfahren zur Aufbereitung von Abwässern aus der Bleiakkumulatorenherstellung sowie eine Einrichtung zur Durchführung dieses Verfahrens.

Auf die als Formation bezeichnete erste Ladung der Elektroden des Bleiakkumulators folgt als letzte Naßbehandlung im Verlaufe ihrer Fertigung gewöhnlich ein Spülprozeß, durch den die weitgehende Entfernung der Formationssäure aus den Plattenporen angestrebt wird. Diese Waschung mit fließendem reinen Wasser kann sowohl an den einzelnen Elektroden vor dem Einbau als auch im Blockkasten vorgenommen werden. Das dabei anfallende Abwasser ist mit ca. 25g H₂SO₄/l belastet. Solche sauren Abwässer werden in der Regel durch eine zweistufige Neutralisation behandelt. Als Neutralisationsmittel sind Kalkmilch, Natronlauge oder Natriumkarbonat gebräuchlich.

Bei Fällung mit Kalkmilch entsteht Gips, der mit Blei verunreinigt ist und als Sonderabfall deponiert werden muß. Hohe Sulfatgehalte im Abwasser werden hierbei auf eine der Löslichkeit des Calciumsulfats entsprechende Konzentration gebracht. Diese liegt bei höheren Sulfatgehalten etwa zwischen 1400mg/l und 2000mg/l.

Wegen der Gefahr von Betonkorrosion streben die meisten zuständigen Behörden Grenzwerte für Sulfat in Abwässern zwischen 400mg/l und 600mg/l an.

Da diese Werte mit Kalkmilch-Verfahren nicht zu erreichen sind, wurden verschiedene wirksamere Verfahren vorgeschlagen. So bewirkt der zusätzliche Einsatz von Calciumaluminat eine über die Kalkmilchneutralisation hinausgehende Sulfatfällung (ATV-Merkblatt M752, Abwässer bei der Herstellung von elektrischen Akkumulatoren und Primärzellen, Gesellschaft zur Förderung der Abwassertechnik e.V., St. Augustin, 1992). Dieses Verfahren liefert als Reaktionsprodukt Calcium-Aluminium-Sulfat (Ettringit) als voluminösen Schlamm, der aber die Abfallmenge aus der Abwasserbehandlung vergrößert. Weiterhin wird die Aufarbeitung verworfener Schwefelsäure aus der Formation mit Hilfe einer Destillation beschrieben, was jedoch mit sehr hohen Energiekosten verbunden ist.

Nach anderen Vorschlägen sollte einfach durch Vermeiden von Abwasser und Abfall Abhilfe geschaffen werden, indem man z.B. die für die Formation nicht mehr brauchbare Säure sammelt und zur Senkung des Sulfatgehalts als Verschnittsäure wieder der Fertigung zur Verfügung stellt (L.Hartinger, Handbuch der Abwasser- und Recyclingtechnik für die metallverarbeitende Industrie, Carl Hanser Verlag München Wien, 1991).

Aber auch auf diese Weise sind die angestrebten niedrigen Grenzwerte für Sulfat im Abwasser bei weitem nicht zu erreichen.

Einen Verschnitt als Maßnahme für die Wiederverwendung eines Abwassers sieht auch die US-PS 4310421, hier allerdings bei der Herstellung der positiven Elektroden von Ni/Cd-Akkumulatoren, vor. Bekanntlich werden die Sinterelektroden nach der Imprägnierung mit Nickelnitrat zur Umwandlung desselben in das Hydroxid mit heißer Natronlauge behandelt. Gemäß US-PS läßt sich die verbrauchte Fällauge mit ihrem Gehalt an NaOH und NaNO₃ sowie mit einem Teil der ihr verbliebenen Wärme wiederverwenden, indem sie in einem Mischtank durch Zugabe von NaOH-Lösung unter laufender Kontrolle ihrer Dichte bis zu einer bestimmten Konzentration aufgefrischt wird und darauf mit frischer Fälluge vereinigt wird.

Aus der EP-OS 454257 ist es bekannt, von verbrauchten Bleibatterien sowohl die Restschwefelsäure als auch die in den aktiven Massen gebundene Schwefelsäure durch Umsetzen mit Natronlauge in Natriumsulfat zu überführen und dieses einer Elektrolyse zu unterziehen, bei der im Kathodenraum der Elektrolysezelle Natronlauge und im Anodenraum Schwefelsäure gebildet werden. Letztere wird nach Aufkonzentrieren wieder in neuen Batterien eingesetzt, die Natronlauge ebenfalls nach Aufkonzentrierung erneut für die Neutralisation der Alt-Säure und für den Bleisulfataufschluß verwendet.

US-A-4 024 055 beschreibt ein Verfahren zur Behandlung von schwefelsaurem Abwasser aus der Bleiakkumulatorenherstellung, wobei das Abwasser mit einem PbO-enthaltenden Suspension neutralisiert und das abgetrennte Neutralisationsprodukt zur Herstellung der Aktivmassenpaste wiederverwendet wird.

Die Erfindung ist mit dem eingangs dargestellten Problem einer drastischen Reduzierung des Sulfatgehaltes im Abwasser aus der Elektrodenwaschung nach der Formation befaßt. Dabei liegt ihr insbesondere auch die Aufgabe zugrunde, einen möglichst wirtschaftlichen Weg der Abwasserbehandlung, der zugleich den Auflagen des Umweltschutzes Rechnung trägt, aufzuzeigen.

Die Aufgabe wird erfindungsgemäß durch ein Verfahren gelöst, wie es im Patentanspruch 1 definiert ist.

Danach bestehen die erfindungsgemäßen Maßnahmen darin, daß zur Neutralisierung des schwefelsäurehaltigen Abwassers Bleioxid, PbO, verwendet wird, wobei Bleisulfat ausfällt, das neben überschüssigem PbO direkt in die Produktion der Bleipaste zurückgeht, und daß die Mutterlauge nach einer Zwischenverwendung als Reinigungswasser für Maschinen, Fußböden und dergleichen einer erneuten Neutralisation mittels PbO, jedoch getrennt von dem direkt aus der Elektrodenwaschanlage stammenden Abwasser, unterzogen wird. Hierbei ausgefällte Reste an Bleisulfat, die begleitet sind von überschüssigem PbO und von Fremdstoffen aus der erwähnten Reinigung, werden dem üblichen Bleirecycling in einer Hütte zugeführt, während die Mutterlauge (das Reinigungswasser) aus diesem Prozeß als gereinigtes Wasser hervorgeht.

Anhand einer Figur, die ein Fließschema der Abwasserbehandlungsanlage zeigt, wird das erfindungsgemäße Verfahren näher erläutert.

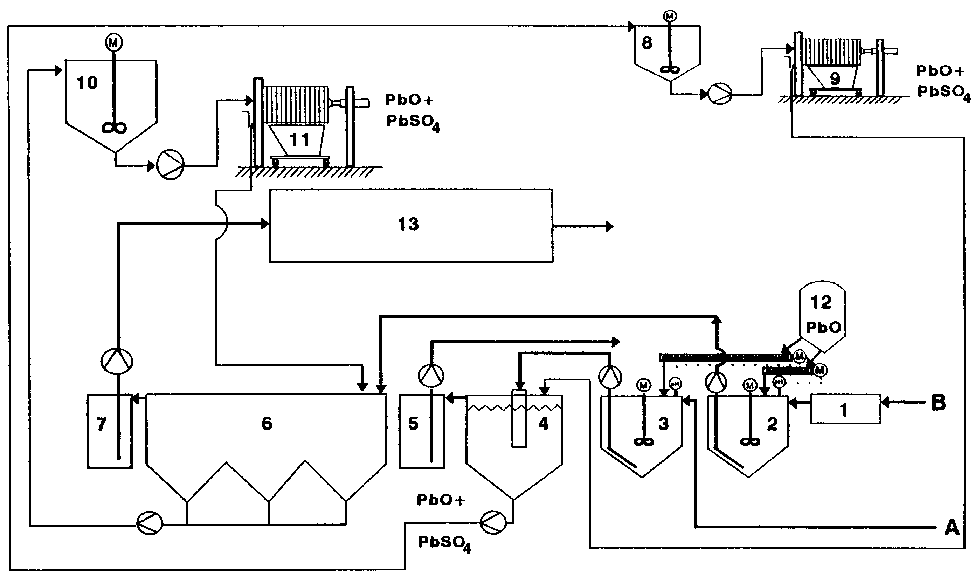

Den numerierten Stationen in der Figur folgend beginnt die Aufbereitung des schwefelsauren Abwassers A aus der Elektrodenwaschanlage mit der Neutralisation durch PbO in Station 3, wobei das PbO dem mit Förderschnecken versehenen Silo 12 entnommen wird. Das Reaktionsgemisch wird in den Dortmundbrunnen 4 verbracht, wo sich das unlösliche Neutralisationsprodukt PbSO₄ zusammen mit überschüssigem PbO durch Sedimentation von der Mutterlauge trennt.

Aus dem Dortmundbrunnen gelangt der bleihaltige Bodenkörper über die Pumpenvorlage 8 zur Filterpresse 9 und findet anschließend wieder direkte Verwendung bei der Herstellung der Bleimassenpaste.

Die Mutterlauge aus der Neutralisationsfällung verläßt den Dortmundbrunnen über die Pumpenvorlage 5 und wird zunächst als Reinigungswasser für die Fußböden oder Maschinen im Pastierraum und Formierraum benutzt. Diese Arbeitsbereiche müssen nämlich mit Rücksicht auf die Staubentwicklung stets feucht gehalten werden.

Das Reinigungswasser B wird darauf in einer Rohwaser-Sammelgrube 1 gesammelt und von dort zu einer erneuten Neutralisation mit PbO in die Station 2 geleitet.

Erfindungswesentlich ist, daß diese Neutralisationsbehandlung des Reinigungswassers B getrennt von der Neutralisation des aus der Elektrodenwaschanlage stammenden sauren Abwassers A geschieht, weil letzteres praktisch frei ist von Verunreinigungen, die für Akkumulatoren schädlich sein könnten -eine Voraussetzung für die direkte Wiederverwendbarkeit des hier ausgefällten Bleis!-, während die Mutterlauge bei der Spülung der Fußböden Fremdstoffe bzw. Verunreinigungen aufgenommen hat.

Eine in Station 2 gefällte Restmenge an Bleisulfat einschließlich überschüssigem PbO und Verunreinigungen wird mitsamt der Mutterlauge in das Absetzbecken 6 übergeführt. Aus diesem gelangt es mittels Pumpenvorlage 10 zur Filterpresse 11, um darauf in das Bleirecycling eines Hüttenbetriebes eingeschleust zu werden.

Die neutrale Mutterlauge im Absetzbecken 6 enthält noch eine der Löslichkeit von Bleisulfat entsprechende Menge an Blei und gegebenenfalls weitere ionogene oder kolloidal gelöste Fremdmetalle. Obwohl die Löslichkeit von PbSO₄ in Wasser nur bei etwa 40mg/l liegt, ist dieser Bleigehalt der Mutterlauge noch bei weitem zu hoch, als daß sie z.B. in einen Vorfluter abgelassen werden könnte.

Zur Entfernung des restlichen Bleis wird sie daher über Pumpenvorlage 7 einer mit 13 bezeichneten Station zugeführt, in welcher eine entsprechende Aufarbeitung nach klassischen Behandlungsmethoden für bleihaltige Abwässer vorgesehen ist. Die meisten der bekannten Maßnahmen zielen darauf ab, das Blei durch Zugabe von Anionen unter Bildung eines Bleisalzes zu fällen, dessen Löslichkeit in jedem Falle geringer als die von Bleisulfat ist.

Günstige Fällungsreagenzien sind Phosphorsäure oder wasserlösliche Phasphate, insbesondere in Gegenwart eines Flockungsbildners wie FeCl₃ und Zusätzen eines Flockungshilfsmittels. Zur Einstellung eines für die Fällung optimalen pH-Wertes im alkalischen Bereich dient weiterhin Natronlauge.

Die Station 13 beinhaltet außerdem einen Klärbehälter, diesem nachgeordnet Kiesfilter sowie an ihrem Ausgang eine Einrichtung zur pH-Endkontrolle und Probenahme.

Das so bis auf unbedenkliche Sulfatmengen gereinigte und von Blei weitestgehend befreite Wasser kann ohne Verstoß gegen Umweltschutzauflagen von der Fabrik abgegeben werden.

Als entscheidender Vorteil des erfindungsgemäßen Verfahrens bleibt festzuhalten, daß mit der Wahl von Bleioxid als Fällungs- und Neutralisationsmittel für das schwefelsaure Abwasser aus der Elektrodenwaschung ein Material in dessen Aufbereitung eingebracht wird, welches ohnehin Bestandteil der aktiven Bleimassen ist und in den Herstellungsprozeß derselben direkt wieder eingebracht werden kann.

## Patentansprüche

1. Verfahren zur Aufbereitung von Abwässern aus der Bleiakkumulatorenherstellung, dadurch gekennzeichnet, daß das beim Waschen der geladenen Elektroden anfallende schwefelsaure Wasser mit Bleioxid, PbO, neutralisiert wird, daß das als Neutralisationsprodukt gebildete Bleisulfat zusammen mit überschüssigem Bleioxid von der Mutterlauge abgetrennt und zur Herstellung der Aktivmassenpaste wiederverwendet wird, daß die Mutterlauge nach Zwischenverwendung als Reinigungswasser einer erneuten Neutralisationsbehandlung mit Bleioxid, jedoch getrennt vom sauren Wasser aus der Elektrodenwaschung, unterzogen wird und daß das hierbei neben Verunreinigungen und überschüssigem Bleioxid anfallende Bleisulfat einem Bleirecycling durch eine Hütte zugeführt wird, während die neutrale Mutterlauge aus dem Reinigungswasser nach weiteren Fällungsbehandlungen und Filtration als gereinigtes Wasser abgegeben wird.

2. Verfahren nach Anspruch 1, dadurch gekennzeichnet, daß das Fällungsreagenz bei den weiteren Fällungsbehandlungen der Mutterlauge aus dem Reinigungswasser Phosphorsäure oder ein wasserlösliches Phosphat ist.

## Claims

1. A process for treating waste waters from the manufacture of lead accumulators, characterized in that the sulphuric-acid water which occurs when the charged electrodes are washed is neutralized with lead oxide, PbO, in that the lead sulphate formed as a neutralization product is separated off, together with excess lead oxide, from the mother liquor and is reused to manufacture the active mass paste, in that the mother liquor, after intermediate use as a cleaning water, undergoes a renewed neutralization procedure with lead oxide, but separated from the acidic water coming from the electrode washing, and in that the lead sulphate which occurs during this in addition to impurities and excess lead oxide is supplied to lead recycling through a refinery, while the neutral mother liquor coming from the cleaning water, after further precipitation procedures and filtration, is discharged as cleaned water.

2. A process according to Claim 1, characterized in that the precipitation reagent during the further precipitation treatments of the mother liquor coming from the cleaning water is phosphoric acid or a water-soluble phosphate.

## Revendications

1. Procédé de traitement d'eaux résiduaires de la production d'accumulateurs au plomb,
caractérisé en ce que
l'eau résiduaire avec de l'acide sulfurique lors du lavage des électrodes chargées est neutralisée à l'oxyde de plomb PbO, en ce que le sulfate de plomb formé comme produit de neutralisation est séparé ensemble avec l'oxyde de plomb excédentaire de la lessive mère et est réutilisé pour la production de la pâte de substance active, en ce que la lessive mère après utilisation intermédiaire est soumise comme eau de nettoyage à un traitement renouvelé de neutralisation avec de l'oxyde de plomb, toutefois séparément de l'eau acide provenant du lavage d'électrodes et en ce que le sulfate de plomb résultant en même temps outre des impuretés et de l'oxyde de plomb excédentaire est amené à un recyclage de plomb par une usine métallurgique, tandis que la lessive mère neutre provenant de l'eau de nettoyage est cédée après d'autres traitements de neutralisation et filtration comme eau purifiée.

2. Procédé selon la revendication 1,
caractérisé en ce que
l'agent chimique de précipitation dans le cas des autres traitements de précipitation de la lessive mère provenant de l'eau de nettoyage est de l'acide phosphorique ou un phosphate soluble dans l'eau.
